(19) Europäisches Patentamt
European Patent Office
Office européen des brevets

(11) **EP 1 298 588 B1**

(12) **FASCICULE DE BREVET EUROPEEN**

(45) Date de publication et mention
de la délivrance du brevet:
**03.08.2011 Bulletin 2011/31**

(51) Int Cl.:
***G06T 7/00*** (2006.01)

(21) Numéro de dépôt: **02291395.8**

(22) Date de dépôt: **06.06.2002**

(54) **Procédé de traitement d'images pour l'extraction automatique d'éléments sémantiques**

Bidverabeitungsverfahren zur automatischen Extraktion semantischer Elemente

Image processing system for the automatic extraction of semantic elements

(84) Etats contractants désignés:
**AT BE CH CY DE DK ES FI FR GB GR IE IT LI LU MC NL PT SE TR**

(30) Priorité: **07.06.2001 FR 0107480**

(43) Date de publication de la demande:
**02.04.2003 Bulletin 2003/14**

(73) Titulaire: **Commissariat à l'Énergie Atomique et aux Énergies Alternatives**
**75015 Paris (FR)**

(72) Inventeurs:
• **Thomas, Corinne**
**52000 Chaumont (FR)**
• **Hede, Patrick**
**95220 Herblay (FR)**
• **Essafi, Hassane**
**Bâtiment B1,**
**91400 Orsay (FR)**

(74) Mandataire: **Thévenet, Jean-Bruno et al**
**Cabinet Beau de Loménie**
**158, rue de l'Université**
**75340 Paris Cédex 07 (FR)**

(56) Documents cités:
**WO-A-00/77735     US-A- 5 764 792**
**US-A- 6 101 274**

**Description**

La présente invention a pour objet un procédé de traitement d'images pour l'extraction automatique d'éléments sémantiques.

L'invention concerne ainsi un procédé de traitement d'images pour la réalisation automatique du partitionnement d'une image ou d'une pluralité d'éléments ou d'objets dont la forme a un sens à partir de la seule donnée de l'image à analyser.

Actuellement, l'augmentation de la quantité des données du type images utilisées dans les applications ou sur les réseaux informatiques pose de très sérieux problèmes d'organisation. Il convient en effet d'être capable de retrouver, si possible rapidement, une image particulière parmi des milliers. Pour ce faire, il est alors nécessaire de décrire le contenu de ces images. Dans le meilleur des cas, l'indexation de ces images est réalisée manuellement. Cette procédure avoue très rapidement ses limites quant à la quantité d'images traitées, voire à la qualité de l'indexation produite. La procédure manuelle est longue et pénible face à un aussi grand nombre d'images. Par ailleurs, ce type d'indexation n'est utilisable efficacement que pour des bases où les indexeurs et les utilisateurs possèdent le même niveau d'expertise. De plus, vu le temps nécessaire à l'élaboration de ces catalogues, il paraît illusoire de décrire les images avec suffisamment de précision ou d'objectivité. L'objet de la recherche n'est pas toujours connu pendant le processus d'indexation : des éléments importants de l'image seront donc invariablement négligés.

Bien avant que la croissance exponentielle de la quantité d'images véhiculées de manière informatique pose quelques problèmes de stockage, la communauté du traitement des images s'est attachée, avec peu de succès, à extraire les composants d'une image afin de tenter de lui associer un contenu sémantique.

Pour tenter de résoudre le problème consistant à distinguer dans une image l'essentiel de l'inutile, la communauté des experts en traitement des images a développé plusieurs approches. Les études antérieures montrent toutefois que depuis trente ans et jusqu'à présent, malgré de nombreux efforts internationaux, aucune méthode de segmentation d'image ne permet d'obtenir des taux de réussite satisfaisants sur une grande quantité d'images, tels que les besoins le nécessiteraient dans des bases de données images industrielles. On se rend rapidement compte de la limite des méthodes habituellement utilisées. En effet, la majorité des techniques de segmentation d'images ne sont efficaces que pour un nombre restreint d'images où l'on peut très souvent faire ressortir des caractéristiques communes. Elles ont souvent des thèmes similaires ou elles ont des conditions d'acquisition ou de prise de vue qui sont pratiquement identiques ou idéales.

Les procédés connus ne permettent pas d'effectuer un découpage aboutissant à la localisation d'un objet de façon automatique.

Parmi les méthodes de segmentation connues ne nécessitant pas de connaissances a priori, on distingue deux classes principales.

La première classe comprend les méthodes adaptées aux images uniformes. Ces méthodes sont incontestablement les plus anciennes et les plus connues. Le but est de localiser les contours définissant une variation importante de niveaux de gris.

La segmentation des images uniformes consiste soit à détecter une variation entre deux régions d'une image, soit à regrouper les pixels ayant des caractéristiques proches. L'information sur le niveau de gris d'un pixel est une information suffisante pour réaliser cette tâche. La première approche concerne la détection de contours et la seconde fait référence à la croissance de régions.

Les méthodes connues de détection de contours sont toutefois généralement très sensibles au bruit ou sont lourdes en temps de calcul et de plus nécessitent souvent une initialisation du contour, c'est-à-dire une connaissance a priori de la position de l'objet. De telles méthodes ne suffisent donc pas à conférer la fiabilité nécessaire.

Les méthodes fondées sur la croissance de régions consistent à fusionner un ensemble de pixels ayant des caractéristiques proches. Elles peuvent se faire à partir de plusieurs niveaux, le plus élémentaire étant le pixel. La première des méthodes est une méthode ascendante d'agrégation de pixels fondée sur un double critère d'homogénéité et de proximité. La seconde est une technique permettant de faire évoluer une partition de l'image en régions en n'intégrant que deux types d'informations : un attribut du pixel traité et la classe des voisins. Le processus est itératif et converge vers une partition de l'image à partir d'une pré-segmentation de celle-ci ou d'un tirage aléatoire. Cette approche peut produire un phénomène de sur-segmentation lorsque les régions sont de taille importante.

On connaît encore des méthodes de segmentation couleur reposant sur l'utilisation d'un modèle de couleur. Ces méthodes effectuent cependant une analyse très locale de l'image, au niveau du pixel, et ne prennent pas en compte les effets de différence de contraste de fond.

La seconde classe de méthodes de segmentation connues comprend les méthodes adaptées aux images texturées.

On peut décomposer l'ensemble des méthodes adaptées aux images texturées en deux classes disjointes. La première concerne les méthodes Bayésiennes, c'est-à-dire les méthodes utilisant une modélisation aléatoire de la texture qui nécessitent normalement une connaissance sur le type de texture que l'on recherche afin de délivrer des résultats corrects, ce qui constitue une limitation. Le second type consiste à extraire des attributs statistiques d'ordre 1, 2 ou 3 puis à utiliser une méthode de classification (méthode d'analyse de données, méthode neuronale) et présente une efficacité limitée.

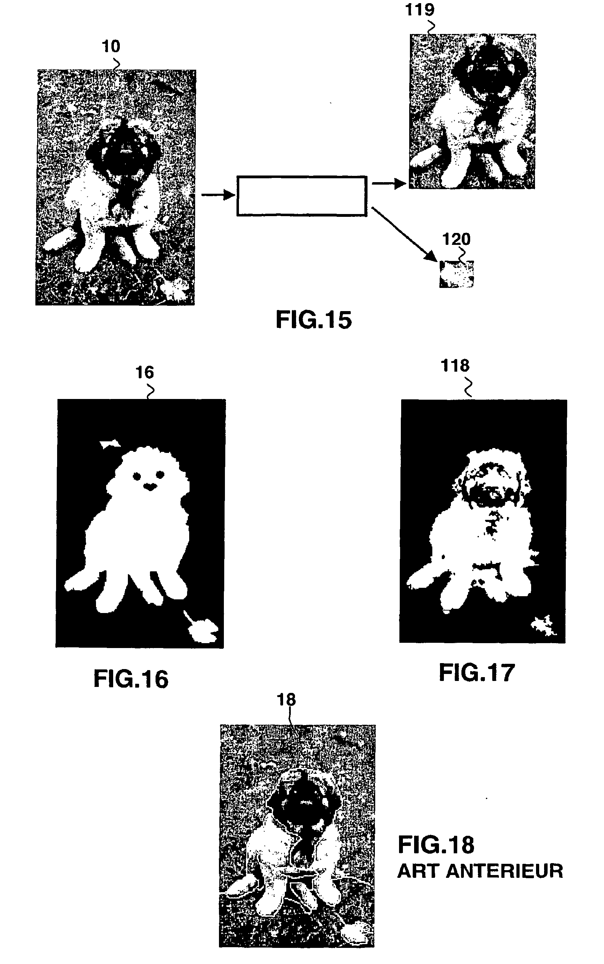

Le résultat d'un exemple de méthode de segmentation classique est illustré sur la Figure 18. De telles méthodes ne permettent pas de donner des résultats acceptables sur des images de nature variée.

Ainsi, les méthodes connues ne permettent pas de localiser de manière satisfaisante des formes connues.

Soit elles font appel à des connaissances particulières en plus des images, soit, si elles fonctionnent sans connaissance a priori, elles ne peuvent donner une forme proche de celle d'un objet et se contentent de produire des régions indépendantes de la notion d'objet.

En particulier, les méthodes connues ne permettent pas d'extraire de façon acceptable les objets pertinents en vue d'une indexation d'images et ne permettent pas un fonctionnement entièrement automatique ne faisant pas intervenir d'opérateur humain au cours du traitement.

La présente invention vise à remédier aux inconvénients de l'art antérieur et à permettre de réaliser de façon entièrement automatique un traitement d'images de natures différentes, sans connaissance a priori sur la nature de ces images, pour identifier des constituants de ces images constituant des objets dont la forme a un sens sémantique et qui comprennent des régions de pixels non nécessairement homogènes.

L'invention vise ainsi à réaliser un procédé de traitement d'images qui permette ensuite soit une indexation automatique des images traitées afin d'obtenir des résultats pertinents de recherche par interrogation des images par le contenu, soit une reconnaissance de formes d'objets, soit encore le suivi de cibles sur des séquences d'images ou dans un montage vidéo.

Ces buts sont atteints, conformément à l'invention grâce à un procédé de traitement d'images pour la réalisation automatique du partitionnement d'une image ou d'une pluralité d'éléments ou d'objets dont la forme a un sens à partir de la seule donnée de l'image à analyser, caractérisé en ce qu'il comprend les étapes suivantes :

a) produire des première, deuxième et troisième images monoplan achromatiques corrélées comportant toute l'information de l'image à analyser mais présentant des caractéristiques chromatiques différentes, à partir de l'image à analyser,

b) soumettre les première, deuxième et troisième images monoplan à une pluralité d'opérations de segmentation en composants homogènes basés sur des critères différents,

c) analyser, pour chacune des première à troisième images monoplan , les résultats des différentes opérations de segmentation pour générer en relation avec chacune des première à troisième images monoplan des masques binaires constitués par des zones à forte certitude d'existence d'objets,

d) comparer, pour chacune des première à troisième images monoplan , les masques binaires résultant des différentes opérations de segmentation et conserver comme significatives de la présence d'un objet les zones communes pour lesquelles le nombre de masques binaires superposables est supérieur à un seuil déterminé,

e) procéder à la sommation pondérée des première à troisième images résultant de l'étape précédente d) pour obtenir une première image résultat contenant les noyaux des composants homogènes,

f) effectuer en partant des noyaux de composants homogènes un coloriage consistant, à partir d'un pixel initial et pour chacun de ses plus proches voisins, à colorier ces derniers par une couleur unique si leur valeur est inférieure à une métrique donnée du pixel initial, puis effectuer une binarisation de la première image résultat pour obtenir une deuxième image résultat contenant des composants homogènes, et

g) extraire les objets individualisés de l'image.

Avantageusement, le procédé comprend l'étape supplémentaire h) de produire une quatrième image dé-corrélée selon le modèle HSV (Teinte - Saturation - Valeur), à partir de l'image à analyser ; on applique également les étapes b), c) et d) à la quatrième image, et, après l'étape f), on effectue une étape i) de reconstruction d'une image identifiant des objets individualisés en combinant la deuxième image résultat à la quatrième image ayant subi les traitements des étapes b), c) et d) pour obtenir une troisième image résultat et en procédant à un nouveau coloriage de la troisième image résultat, avant d'extraire les objets individualisés de l'image reconstruite.

De préférence, on produit les première, deuxième et troisième images monoplan achromatiques corrélées à partir de l'image à analyser divisée selon trois bandes de fréquences de l'espace couleur (RGB) (Rouge, Vert, Bleu).

Selon un mode particulier de réalisation, lors de l'étape b) de segmentation en composants homogènes en utilisant une pluralité de critères différents, on procède

i) à une détection des contours,
ii) à une détection des caractéristiques de texture via un filtrage équivalent à un banc de filtres passe-haut et passe-bas.
Avantageusement, lors de l'étape b) de segmentation en composants homogènes en utilisant une pluralité de critères différents, on procède en outre
iii) à une détection chromatique et achromatique.

L'étape f) de coloriage consiste, à partir d'un pixel initial, à colorier chacun de ses plus proches voisins d'une couleur semblable si leur valeur est inférieure à une métrique donnée du pixel initial et à réitérer le processus de façon récursive, chacun des pixels plus proches voisins devenant à son tour un pixel initial.

Selon un mode particulier de réalisation, on effectue les étapes b) et c) au moins deux fois en utilisant à chaque fois pour les opérations de segmentation des jeux de paramètres de contrôle d'entrée définis de façon nominale avec des valeurs différentes.

Selon une autre caractéristique particulière, au niveau de chaque opération de segmentation, les paramètres de contrôle d'entrée sont modifiés automatiquement à la fin d'un processus de segmentation, si les résultats obtenus ne sont pas significatifs, et dans ce cas le processus de segmentation est réitéré de façon automatique par un rebouclage avec les nouvelles valeurs modifiées des paramètres de contrôle d'entrée.

Selon un mode particulier de réalisation, une opération de segmentation en composants homogènes en procédant à une détection des contours avec un filtre optimal comprend les étapes suivantes :

- conversion en un seul plan de luminance de l'espace RGB initial de l'image à traiter,
- réalisation d'une moyenne afin d'éliminer le bruit lié à l'acquisition,
- calcul de gradients horizontaux et de gradients verticaux,
- sommation des deux images des gradients afin d'obtenir une seule image,
- recherche du minimum et du maximum dans l'image obtenue afin de déterminer les valeurs haut et bas de seuillage,
- seuillage par hystérésis par rapport aux valeurs haut et bas de seuillage précédemment déterminées,
- élimination des bords,
- binarisation,
- ouverture morphologique suivie de multiples fermetures morphologiques elles-mêmes suivies de multiples ouvertures morphologiques,
- remplissage de trous pour basculer le résultat obtenu des contours en un résultat disponible sous forme de régions.

Selon un autre mode particulier de réalisation, une opération de segmentation en composants homogènes en procédant à une détection des caractéristiques de texture via un filtrage équivalent à un banc de filtres passe-haut et passe-bas comprend un processus de transformation en ondelettes qui est opéré d'une part sur des lignes puis sur des colonnes de l'image avec à chaque fois un filtre passe-bas, caractérisé par la formule

$$y(i) = 0,5 * x(i) + 0,5\, y(i\text{-}1)$$

et un filtre passe-haut caractérisé par la formule

$$y(i) = 0,5 * x(i) - 0,5\, y(i\text{-}1),$$

chaque élément (i, j) de la matrice 3D d'attributs résultant de la décomposition étant un vecteur caractérisant la distribution des valeurs des pixels au voisinage du point (i, j).

Après chaque opération de filtrage par un filtre passe-haut et un filtre passe-bas, on procède à une division par $2^n$ du nombre d'images obtenues de manière à diminuer le nombre de données à traiter, le nombre entier $\underline{n}$ étant d'autant plus grand que la résolution et la taille de l'image à traiter sont élevées.

Le processus de transformation en ondelettes est réitéré plusieurs fois sur $\underline{n}$ étages et, après une phase de lissage, on réduit en profondeur la taille de la matrice 3D d'attributs obtenue en ne retenant que le nombre d'images [2n + (n-1)] contenant le plus de détails.

De préférence, on effectue en outre un processus de recherche de la meilleure partition de la matrice d'attributs au sens de la maximisation de l'énergie.

Selon encore un autre mode particulier de réalisation, une opération de segmentation en composants homogènes en procédant à une détection chromatique et achromatique comprend une étape de conversion de l'image vers le modèle HSV (Teinte-Saturation-Valeur), une étape de propagation achromatique pour éliminer l'arrière-plan, une étape d'ouverture effectuée lors d'une première itération pour éliminer le bruit et reconnecter les régions et, dans le cas d'une non-convergence en fin de cette première itération, une étape de fermeture effectuée lors d'une deuxième itération.

D'autres caractéristiques et avantages de l'invention ressortiront de la description suivante de modes particuliers de réalisation, en référence aux dessins annexés, sur lesquels :

- la Figure 1 est une vue schématique montrant une première étape du procédé selon l'invention effectuant un pré-découpage sur une image initiale pour obtenir une pluralité d'images intermédiaires,
- la Figure 2 est une vue schématique montrant une deuxième étape du procédé selon l'invention effectuant un découpage sur l'une des images intermédiaires selon trois procédés de segmentation différents,
- la Figure 3 est un organigramme montrant un premier exemple de méthode de segmentation appliquée aux images intermédiaires de la Figure 1,
- la Figure 4 est un organigramme montrant un deuxième exemple de méthode de segmentation appliquée aux images intermédiaires de la Figure 1,
- la Figure 5 est un organigramme montrant un troisième exemple de méthode de segmentation appliquée aux images intermédiaires de la Figure 1,
- la Figure 6 est une vue schématique montrant l'application de la deuxième étape du procédé selon l'invention effectuant un découpage sur l'ensemble des images intermédiaires selon trois procédés de segmentation différents et deux passes successives mettant en oeuvre des paramètres prédéfinis différents pour les opérations de segmentation,
- la Figure 7 est une vue schématique montrant la mise en oeuvre d'une troisième étape du procédé selon l'invention avec formation de noyaux,
- la Figure 8 est une vue schématique d'un processus de cartographie effectué sur une image intermédiaire dé-corrélée,
- la Figure 9 est une vue schématique d'un processus de cartographie effectué sur des images intermédiaires dé-corrélées,
- la Figure 10 est une vue schématique d'ensemble d'une étape de reconstruction d'une image à partir de l'image initiale et des images corrélées et de l'image dé-corrélée obtenues à l'issue du processus de cartographie,
- la Figure 11 est une vue schématique montrant une étape de sommation pondérée d'images corrélées, de seuillage et de coloriage,
- la Figure 12 est une vue schématique montrant une étape de binarisation à partir d'une image obtenue à l'étape de la Figure 11,
- la Figure 13 est une vue schématique montrant une étape de reconstruction d'une image à partir d'une image dé-corrélée obtenue à l'issue du processus de cartographie,
- la Figure 14 est une vue schématique d'une étape finale d'étiquetage,
- la Figure 15 montre un exemple de transformation d'une image initiale en images finales conformément à l'invention,
- la Figure 16 est un exemple d'image finale obtenue manuellement,
- la Figure 17 est un exemple d'image finale obtenue automatiquement selon l'invention, et
- la Figure 18 est un exemple d'image résultant d'une méthode de segmentation classique.

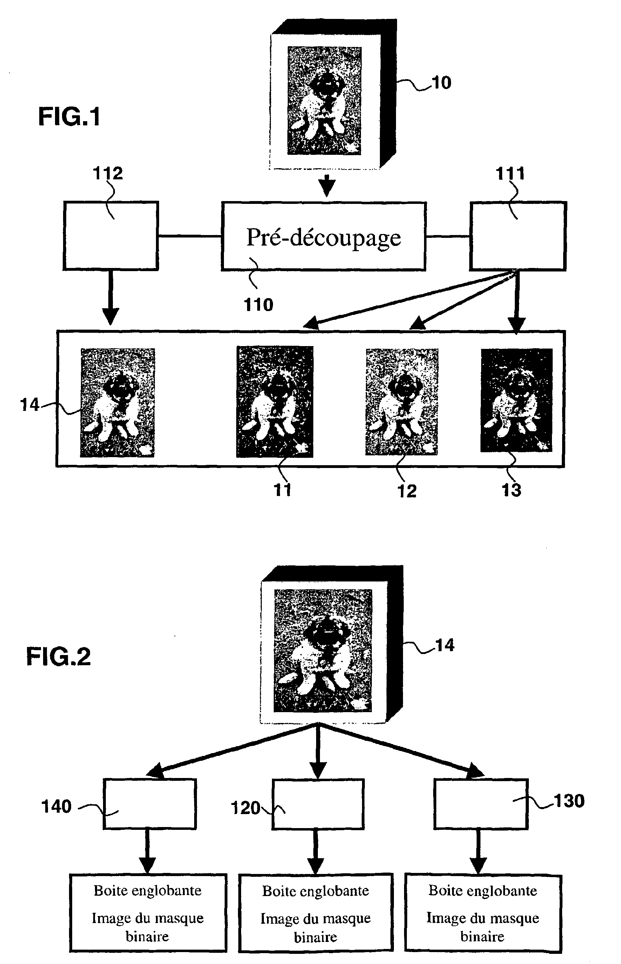

La Figure 1 montre une image d'entrée 10 à traiter, qui peut être une image couleur, mais pourrait également être une image en noir et blanc, et dont on ne connaît pas a priori le sujet.

Le procédé selon l'invention permet de mettre clairement en évidence, de façon entièrement automatique, la localisation d'éléments de forme sémantique, c'est-à-dire de zones détectées, ayant une signification sémantique non formulée, non nommée, correspondant à un objet de forme identifiable, pouvant être réel ou symbolique.

Selon l'invention, le traitement d'images consistant en un découpage de l'image en objet dont la forme a un sens s'effectue essentiellement en trois étapes.

L'image est d'abord traitée simultanément par plusieurs processus de découpage, puis les résultats obtenus sont analysés pour générer les zones, appelées noyaux, à forte certitude d'existence d'objets et enfin ces noyaux sont utilisés, lors de la troisième étape, pour délimiter les objets présents dans l'image.

En fait, l'image à traiter 10 subit d'abord un traitement préalable ou pré-découpage 110 (Figure 1).

Afin de pouvoir localiser avec fiabilité les zones dignes d'intérêt, l'information de l'image initiale 10 est utilisée plusieurs fois, de manière à renforcer la certitude des régions où un objet est présent.

A titre d'exemple préférentiel, en utilisant le modèle de couleurs RGB (rouge, vert bleu), lors de l'étape de prédécoupage 110 on produit, selon le module 111, des première, deuxième et troisième images 11, 12, 13 monoplan achromatiques corrélées à partir de l'image à analyser divisée selon trois bandes de fréquences de l'espace couleur RGB.

Sur la Figure 1, on peut remarquer la très forte similitude entre les différentes bandes de l'image. L'objectif de l'utilisation de la redondance de ces images corrélées 11 à 13 est bien d'obtenir un résultat final proche. De ce fait, à l'issue du processus de découpage de ces différentes bandes, les informations de localisation d'un objet vont avoir tendance à renforcer la certitude de la présence de cet objet dans l'image initiale. Cette triple vision, combinée à des analyses très différentes du contenu des images, offre une palette quasi exhaustive des caractéristiques de présence des objets contenus dans les images.

Parallèlement à la séparation de l'image initiale 10 en trois bandes, il est aussi possible d'utiliser, lors de l'étape de prédécoupage 110, dans un module 112, un module de couleur dé-corrélé qui permet de mieux mettre en évidence les caractéristiques de teinte de l'image dans une image intermédiaire supplémentaire 14.

L'uniformité en terme de teinte, de contraste ou de luminosité est un élément pertinent pour le processus de découpage d'un objet. Or, ces informations de teinte, de contraste ou de luminosité n'existent pas dans le modèle RGB (rouge, vert, bleu). Parmi les modèles de couleurs existants pouvant convenir, un modèle chromatique s'avère préférable à un modèle colorimétrique coûteux en terme de calcul et nécessitant des connaissances a priori sur l'image dont on ne dispose pas. On utilise ainsi avantageusement le modèle HSV (Hue-Saturation-Value ou Teinte-Saturation-Valeur).

En sortie des modules 111, 112 de l'étape de prédécoupage 110, on obtient des première à quatrième images intermédiaires 11 à 14, à savoir trois images monoplan 11 à 13 et une image couleur 14 composée de trois plans, sur lesquelles va s'opérer la suite du traitement.

Comme on peut le voir sur la Figure 2, on applique à chaque image intermédiaire telle que l'image 14, des méthodes 120, 130, 140 de découpage ou segmentation en composants homogènes basées chacune sur des critères différents et délivrant un fichier de sortie indiquant les coordonnées cartésiennes des boîtes englobantes tout en conservant l'image du masque binaire de la segmentation.

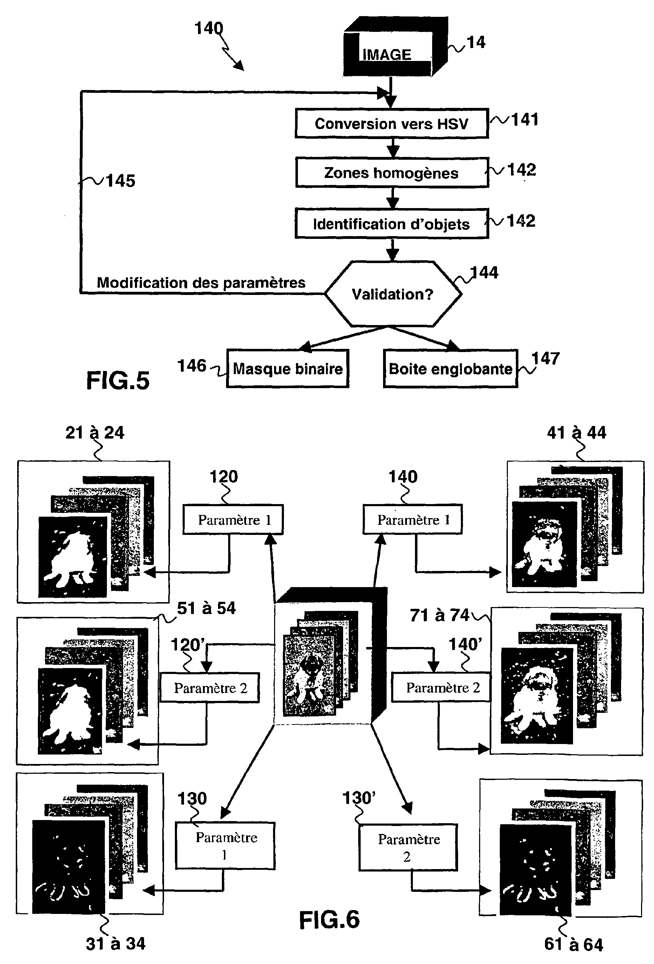

Afin de couvrir une large gamme d'images, on peut utiliser chacun de ces processus de découpage 120, 130, 140 avec deux jeux de paramètres de contrôle d'entrée déterminés de façon nominale, de sorte que l'on applique les images 11 à 14 à six processus de traitement 120, 120', 130, 130', 140, 140' qui, dans l'exemple considéré, sont basés sur trois critères différents (Figure 6).

A l'issue des processus de découpage qui utilisent deux jeux de paramètres, on obtient ainsi six images 24, 34, 44, 54, 64, 74 issues de l'image 14 auxquelles il faut rajouter dix-huit images provenant de la séparation en trois bandes 11, 12, 13 de l'image initiale 10 passée dans les processus de découpage toujours avec deux jeux de paramètres. Ces paramètres peuvent être foncièrement dissemblables en fonction de la convergence des algorithmes. Au total, dans l'exemple considéré, ce sont vingt-quatre images comportant des régions potentiellement candidates à la présence d'un objet qui sont créées. Ces images sont référencées 21 à 24, 31 à 34, 41 à 44, 51 à 54, 61 à 64 et 71 à 74 sur la Figure 6.

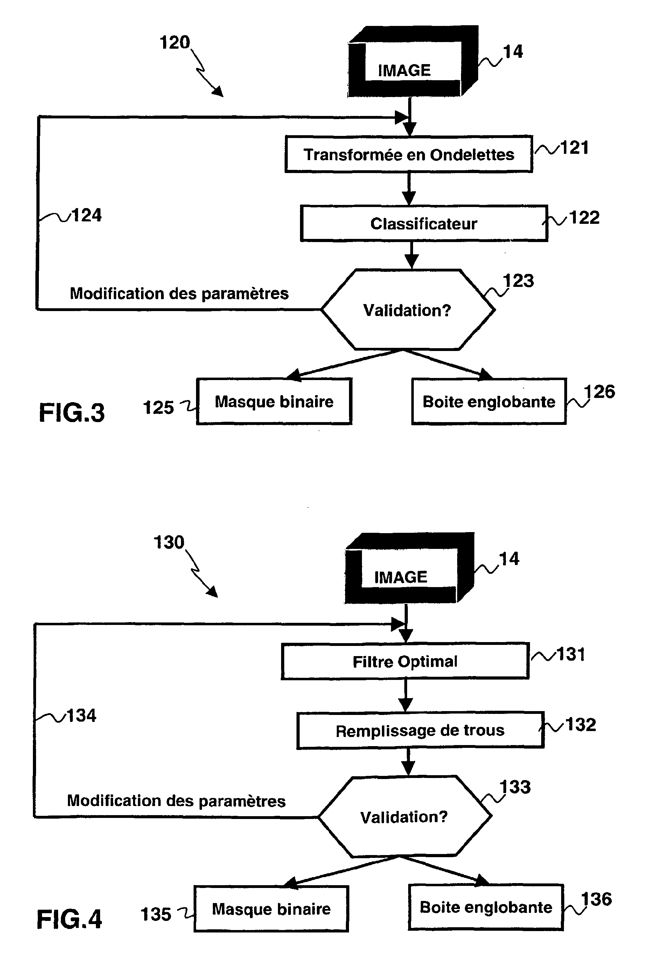

On décrira maintenant en référence aux Figures 3 à 5, trois exemples particuliers de méthodes complémentaires de découpage des images intermédiaires 11 à 14, qui permettent de délivrer une cartographie complète représentative de l'image initiale 10.

Les processus de découpage sont conçus de manière à sur-découper dans le pire des cas, une étape suivante d'arbitrage permettant d'éliminer des zones entachées d'erreur.

Les trois procédés de découpage présentés ci-dessus prennent en compte respectivement la texture, les contours et la couleur.

Le but du procédé de découpage 120 basé sur la texture est de découper l'image en plusieurs régions où chacune possède une apparence homogène en ayant des propriétés statistiques et visuelles différentes.

Un exemple de méthode de découpage 120 de ce type basée sur des filtrages spatio-temporels est illustré sur la Figure 3.

Le module de segmentation 120 assure la détection des caractéristiques de texture via un filtrage équivalent à un banc de filtres passe-haut et passe-bas à partir de l'image intermédiaire 11, 12, 13 ou 14 que l'on cherche à segmenter. Le module 120 délivre en sortie un masque binaire et un fichier texte contenant les coordonnées cartésiennes des boîtes englobantes des objets localisés dans l'image.

La transformée en ondelettes 121 permet d'obtenir des informations uniques relativement au domaine fréquentiel de l'image. La transformée en ondelettes permet une bonne localisation dans le domaine spatial et fréquentiel, en particulier dans le domaine des textures et s'avère plus performante que les méthodes utilisant les matrices de cooccurence ou la transformée de Fourier.

Une méthode optimisée assurant l'extraction et la caractérisation des constituants des images présente les caractéristiques suivantes :

Une transformée en ondelettes est de préférence de type récursive et présente des filtres passe-bas et passe-haut de préférence de taille 5, bien que des tailles voisines, par exemple de 4 ou 6, puissent également être envisagées. Un filtre linéaire passe-bas de taille 5 est caractérisé par des indices $a_0$ et $a_5$ et $b_1$ à $b_4$ de la façon suivante :

$$y(i) = a_5 * x(i-5) + a_4 * x(i-4) + a_3 * x(i-3) + a_2 * x(i-2) + a_1 * x(i-1) + a_0 * x(i)$$

$$+ b_4 * y(i-4) + b_3 * y(i-3) + b_2 * y(i-2) + b_1 * y(i-1).$$

Un filtre linéaire passe-haut de taille 5 est pour sa part caractérisé par des indices $C_0$ à $c_5$ et $d_1$ à $d_4$ de la façon suivante :

$$y(i) = c_5 * x(i-5) + c_4 * x(i-4) + c_3 * x(i-3) + c_2 * x(i-2) + c_1 * x(i-1) + c_0 * x(i)$$

$$+ d_4 * y(i-4) + d_3 * y(i-3) + d_2 * y(i-2) + d_1 * y(i-1).$$

De bons résultats sont obtenus en choisissant par exemple $a_0 = 0,5$, $b_1 = 0,5$, $c_0 = 0,5$, $d_1 = -0,5$ et tous les autres coefficients à zéro.

Le résultat de cette décomposition par les filtres passe-bas et passe-haut est une matrice 3D d'attributs, chaque élément (i,j) de la matrice étant un vecteur caractérisant la distribution des valeurs des pixels au voisinage du point (i,j).

Le processus de transformation en ondelettes avec filtre passe-bas et filtre passe-haut est opéré d'une part sur des lignes puis sur des colonnes de l'image.

Le processus de transformation peut être réitéré plusieurs fois sur n étages, par exemple deux ou trois étages.

Après une phase de lissage, on peut réduire en profondeur la taille de la matrice d'attributs en ne retenant que le nombre d'images [2n+(n-1)] contenant le plus de détails, n étant le nombre d'étages.

Lors de la réduction du nombre d'images (par exemple pour ne garder que huit images sur soixante-quatre images dans le cas où n = 3), on peut conserver une première image résultant de l'application du filtre passe-bas dans les deux directions, éliminer une image résultant de l'application du filtre passe-haut dans les deux directions, et procéder à des comparaisons successives sur les images restantes en opérant le cas échéant des fusions pour obtenir les autres (2n + n - 2) images à retenir.

On peut également utiliser une méthode basée sur une analyse en composantes principales de la matrice d'attributs.

Pour réduire la fluctuation entre des vecteurs d'attributs des pixels de la même texture, on effectue un processus de recherche de la meilleure partition, au sens d'un critère donné, par exemple la maximisation de l'énergie, de la matrice d'attributs aboutissant à une image de région où les pixels d'une même région ayant des attributs similaires ont une même étiquette. Pour ce faire, on peut utiliser un algorithme de type c-means. Cette technique, connue aussi sous le nom de "clustering" consiste à regrouper dans des classes identiques les pixels ou des groupes de pixels dont les caractéristiques tendent à former des grappes dans l'espace des paramètres.

Le résultat de cette répartition à l'aide d'un classificateur 122 est une image labellisée où les pixels d'une même zone homogène ont la même étiquette.

Cette image est traitée pour identifier les objets et leur boîte englobante.

Ainsi, un étiquetage des différentes régions est effectué localisant la position éventuelle des différents objets représentés par leur forme respective. La forme peut être représentée par une boîte englobante délimitant l'extension spatiale de l'objet et une image du masque binaire est conservée car elle seule permet une précision suffisamment grande pour localiser l'objet en minimisant l'ambiguïté des contours. Ce masque binaire sera utilisé plus tard par un autre module. Finalement, il faut noter que les différentes parties de cet algorithme sont optimisées pour le fonctionnement sur machines parallèles.

Les résultats du traitement de découpage au sein des modules 121, 122 incluant des étapes de décomposition de l'image en quatre images de bandes de fréquence, de normalisation, de fusion, de classification et d'étiquetage sont évalués dans l'étape de validation 123. Si les résultats n'apparaissent pas satisfaisants, les paramètres du module 121 sont modifiés (ligne 124) et l'image intermédiaire telle que l'image 14 est segmentée à nouveau par le même processus, mais avec des paramètres modifiés. La modification des paramètres peut s'opérer plusieurs fois jusqu'à ce que le processus de découpage ait convergé vers une solution plausible.

On obtient en sortie du module 120 un masque binaire 125 et une boîte englobante 126.

La Figure 4 montre la mise en oeuvre d'un module de représentation 130 assurant une détection des contours de l'image intermédiaire telle que l'image 14 à l'aide d'un filtre optimal 131.

Le module 130 permet de fournir une information relative aux brusques transitions des valeurs des pixels indiquant la manifestation de la présence d'une frontière d'un objet. On notera que le procédé de segmentation par détection des contours avec un filtre optimal 131 est mis en oeuvre d'une façon particulière, sans fermeture des contours dans la partie finale du processus. Pour éviter de laisser des contours ouverts qui ne permettent pas de statuer sur la forme de l'objet, le résultat obtenu des contours est transformé en un résultat disponible sous forme de régions en utilisant une étape 132 impliquant par exemple un remplissage de trous.

L'étape 132 est suivie d'une étape de localisation de la position des différents objets candidats, c'est-à-dire d'identification d'objets. Cette étape de localisation peut être fondée sur un algorithme d'étiquetage. Une étape de validation 133 peut comprendre une condition finale de validation qui conduit à un achèvement du traitement si par exemple le nombre d'objets identifiés est supérieur ou égal à un. On obtient alors en sortie un masque binaire 135 et une boîte englobante 136. Si au contraire à l'étape de validation 133 le critère d'arrêt n'est pas atteint, c'est-à-dire s'il n'a pas été identifié d'objet, alors on procède à une modification des paramètres de contrôle d'entrée par la ligne 134 et le processus de segmentation avec détection des contours de l'image est réitéré avec les paramètres modifiés. A titre d'exemple de modification de paramètre, on peut réduire la valeur de la distance euclidienne minimale de regroupement des zones.

De façon plus particulière, l'ensemble du filtre optimal 131 et de l'étape 132 de remplissage de trous peut comprendre les étapes suivantes :

- conversion en un seul plan de luminance de l'espace RGB initsal de l'image à traiter,
- convolution à l'aide d'un filtre moyenneur de débruitage,
- convolution Prewitt de détection des contours horizontaux et verticaux (calcul de gradients horizontaux et de gradients verticaux),
- sommation des deux images des gradients afin d'obtenir une seule image,
- recherche du maximum et du minimum dans l'image des gradients, afin de déterminer des valeurs haut et bas de seuillage,
- seuillage par hystérésis (par exemple mini = 3 • moyenne et maxi = 4 • moyenne),
- élimination des bords,
- binarisation,
- ouverture morphologique suivie de multiples fermetures morphologiques, elles-mêmes suivies de multiples ouvertures morphologiques,
- remplissage de trous pour transformer le résultat obtenu des contours en un résultat disponible sous forme de régions,
- étiquetage.

La Figure 5 illustre un module 140 de segmentation en composants homogènes, basé sur une détection chromatique et automatique, qui est utile dans le cas d'images initiales 10 en couleur, pour définir des régions homogènes de couleur.

L'image intermédiaire à segmenter, telle que l'image 14, est convertie, à l'étape 141, dans un espace chromatique pertinent, par exemple selon le modèle HSV (Teinte-Saturation-Valeur).

Dans une étape 142, les zones respectivement pixels connexes chromatiques et achromatiques similaires, en prenant comme critère de ressemblance la métrique euclidienne, sont regroupées au sein d'une même région respectivement zone. Grâce à ce mécanisme de regroupement en zones homogènes, les variations réduites de la teinte n'affectent pas le processus de numérotation d'une région.

En revanche, tout changement significatif de la teinte ou de la saturation en fonction d'un certain degré de luminance reflète un passage vers un autre type de région.

Le procédé comprend ensuite une étape 143 de localisation de la position des différents objets candidats (étape d'identification d'objets). Cette étape de localisation peut être fondée sur un algorithme d'étiquetage.

Le traitement est achevé par une étape de validation 144. Si la condition finale de validation est remplie, par exemple si le nombre d'objets identifiés est supérieur ou égal à un, à l'étape 146 l'image du masque binaire est sauvegardée et à l'étape 147 on procède à l'écriture du fichier de boîtes englobantes.

Si la condition finale de validation n'est pas remplie, on procède (ligne 145) à une modification des paramètres de contrôle d'entrée du procédé de segmentation. Par exemple, la valeur de la distance euclidienne minimale de regroupement des zones est réduite et l'algorithme est relancé avec cette nouvelle valeur.

Dans un exemple particulier de réalisation du module de segmentation 140 de la Figure 5, on peut ainsi avoir les étapes suivantes :

- chargement de l'image intermédiaire telle que l'image 14,
- coloriage pour élimination du fond,
- effacement des zones non nulles connexes aux bords,
- opérations morphologiques : ouverture ou fermeture suivant le nombre d'itérations, par exemple à la première itération, on effectue une ouverture afin d'éliminer le bruit et de reconnecter les régions, et dans le cas d'une non-convergence en fin de cette première itération, on utilise une fermeture pour la seconde itération,

- étiquetage,
- création d'une boîte englobante pour chaque objet trouvé.

Les opérations de découpage effectuées lors des étapes de segmentation 120, 130, 140, et éventuellement réitérées avec des paramètres de contrôle d'entrée différents lors des étapes 120', 130', 140', sont des opérations qui consistent à trouver des zones homogènes (au sens d'un processus de découpage donné) dans une image. Ceci est utile pour des besoins de différenciation ou de reconnaissance. Par exemple, on peut vouloir séparer le ciel des arbres dans une photographie de paysage.

Pour une même image, les différentes techniques utilisées ne donnent pas nécessairement le même découpage et, de plus, un certain nombre de techniques ont des comportements différents en fonction de leurs paramètres de sorte qu'une même technique avec des paramètres légèrement différents donne des découpages finals très hétérogènes.

Dans le procédé selon l'invention, on confronte les résultats de plusieurs processus de découpage pour faire un nouveau découpage qui utilise les informations de tous les autres. Cette étape supplémentaire forme un consensus des différents découpages et met en avant l'information pour laquelle tous (ou presque tous) les traitements sont d'accord en éliminant les informations contradictoires.

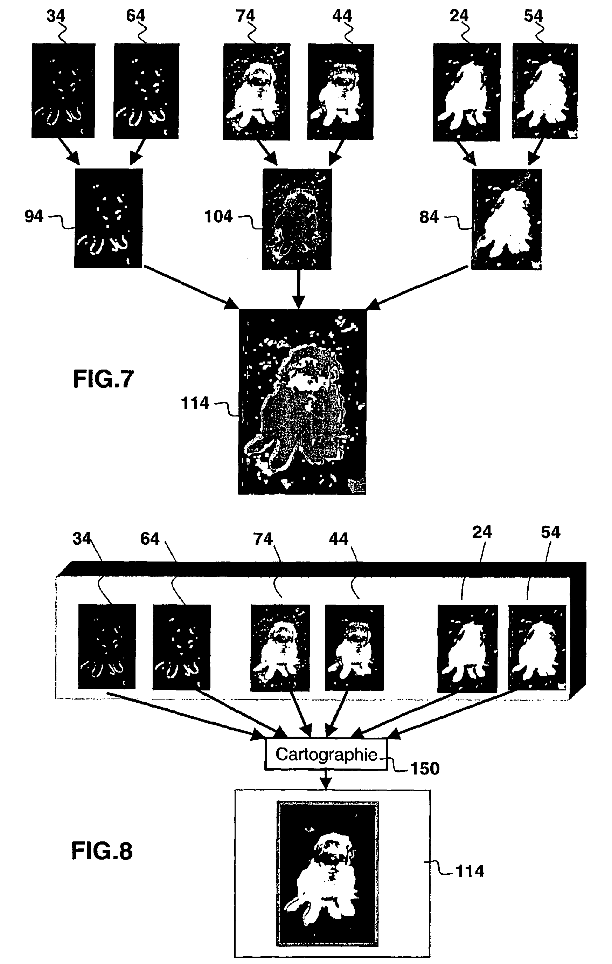

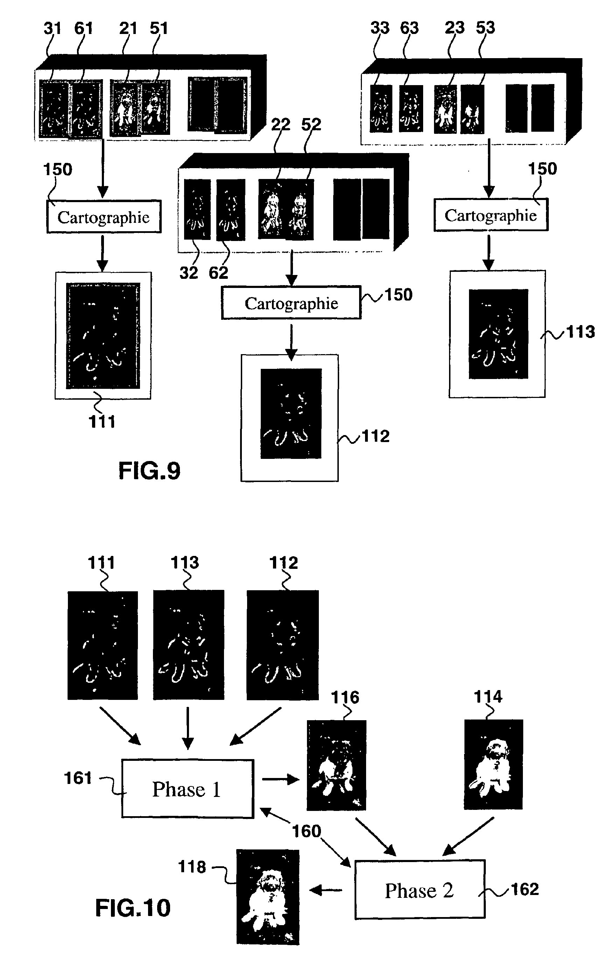

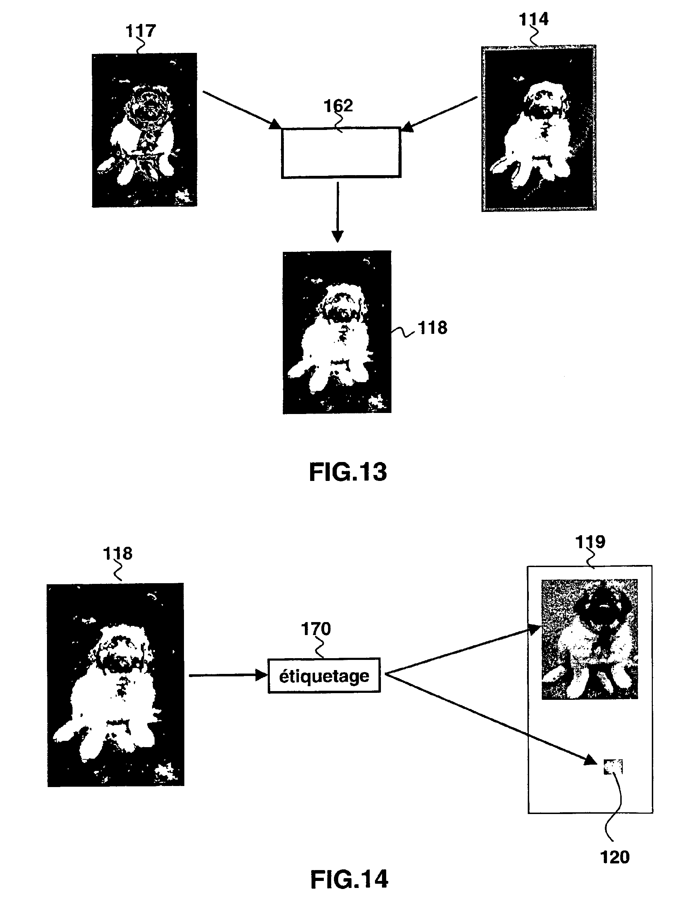

Ce processus de coopération des résultats se fait en deux étapes. Une étape d'arbitrage des résultats (Figures 7 à 9) et une étape de reconstruction (Figures 10 à 13).

Après l'étape de la Figure 6, pour une même image, on a plusieurs découpages. Si on envisage tous les cas possibles, on peut avoir des découpages à deux zones (un objet et le fond), à trois zones (deux objets et le fond), etc. On doit donc prévoir un traitement valable quel que soit le nombre de régions. De plus, le nombre de zones est un paramètre qui peut varier d'une découpe à une autre : un processus de découpage aura détecté trois éléments alors qu'un autre en aura détecté sept, par exemple.

Il est intéressant de noter qu'à ce stade, on n'est plus dépendant de l'image de départ 10 et on ne travaille que sur les découpes (images 21 à 24, 31 à 34, 41 à 44, 51 à 54, 61 à 64 et 71 à 74). On a un découpage en zones comme on peut l'avoir dans des tableaux que l'on fait en plaçant une couleur différente dans chaque zone, en fonction du numéro de la région où on va peindre.

Le principe de l'intégration est d'associer des régions entre les différents découpages (entre découpe et non pas dans une même découpe). On va ainsi construire une nouvelle découpe contenant l'information de toutes les découpes du départ.

On cherche bien à trouver un consensus entre les différentes découpes et en aucun cas une discrimination des mauvais découpages pour ne garder que l'unique bon.

Si l'on prend comme exemple une image comprenant deux types de zones, le fond et l'objet, cette image va donner naissance à une région par processus de découpage, ces régions ayant des surfaces différentes. L'ensemble de ces régions a à peu près le même centre de gravité correspondant plus ou moins au centre de l'objet. On a des découpes binaires (fond ou objet). Mettre en correspondance les résultats de telles découpes est simple car on n'a qu'une seule possibilité. On superpose simplement la zone représentative de l'objet des différentes découpes. Ceci permet de déterminer le noyau (zone commune à toutes les différentes découpes) puis on décide simplement à partir de quel nombre on estime que l'on conserve le noyau. Ce nombre peut être fixé à 80% par exemple. Cela veut dire que pour dix processus de découpage, huit devront être superposables pour que l'on garde le noyau. Par exemple, on peut considérer que tous les processus de découpage possèdent un taux (probabilité entre 0 et 1) de réussite identique. Mais on peut aussi utiliser un taux de réussite associé à la qualité du processus de découpage utilisé (sommation pondérée). On généralise le principe précédent à un nombre N de zones, en effectuant une sommation de tous les taux de réussite des processus de découpage.

L'emplacement et la taille des régions varient bien évidemment en fonction de la méthode de découpage, mais le nombre de régions peut également varier d'une découpe à une autre.

Une fois que la mise en correspondance a été effectuée, on dispose d'un ensemble de N régions que l'on appelle des noyaux. La zone à l'intersection de toutes les régions (non vides) est un ensemble de pixels qui a de très fortes chances d'appartenir à l'objet (théorème des probabilités d'événement indépendants).

Le cas pour lequel aucun noyau de taille suffisamment grande (par rapport à la taille de l'image) n'est trouvé, c'est-à-dire qu'il n'existe pas de points communs à toutes les découpes, ne doit pas se présenter car le principe de convergence des processus de découpage (boucles 124, 134, 145 des Figures 3 à 5) aboutit à l'existence d'au moins un objet.

On a représenté sur la Figure 7, à titre d'exemple, les masques binaires des images 34, 64 ; 44, 74 ; 24, 54 obtenues à partir d'une image intermédiaire 14 après traitement de segmentation dans les étapes 130, 130', 140, 140', 120, 120' respectivement de la Figure 6.

Les images 34, 64, issues du même processus de découpage 130 mais avec des paramètres de contrôle d'entrée différents, sont combinées pour donner une image 94.

De la même façon, les images 44, 74 issues du même processus de découpage 140, mais avec des paramètres de contrôle d'entrée différents, sont combinées pour donner une image 104.

Les images 24, 54 issues du même processus de découpage 120, mais avec des paramètres de contrôle d'entrée différents, sont combinées pour donner une image 84.

Les images 94, 104, 84 sont elles-mêmes combinées pour former une image 114 dans laquelle les zones grisées identifient les noyaux principaux.

La Figure 8 résume le processus décrit ci-dessus et montre l'image 114 obtenue par l'opération de cartographie 150 impliquant les étapes d'analyse des images des masques binaires 34, 64, 44, 74, 24, 54 résultant des différentes opérations de segmentation effectuées sur l'image intermédiaire 14 dé-corrélée comprenant trois plans.

La Figure 9 montre le processus de cartographie similaire effectué sur chacune des découpes ou images des masques binaires résultant de différentes opérations de segmentation effectuées sur les images intermédiaires 11 à 13 monoplan corrélées.

Ainsi, les images des masques binaires 21, 51 31, 61 issues des étapes de découpage 120, 120', 130, 130' conduisent, par l'étape de cartographie 150, à une image résultat 111 selon un processus analogue à celui décrit pour l'obtention de l'image résultat 114 de la Figure 8.

De façon similaire, les images des masques binaires 22, 52 ; 32, 62 issues des étapes de découpage 120, 120', 130, 130' conduisent, par l'étape de cartographie 150, à une image résultat 112 et les images des masques binaires 23, 53, 33, 63 issues des étapes de découpage 120, 120', 130, 130' conduisent, par l'étape de cartographie 150, à une image résultat 113.

Les quatre images résultats 111 à 114 sont alors binarisées pour valider les intersections de régions redondantes constituant les noyaux.

De façon plus particulière, le processus de cartographie illustré sur les Figures 7 à 9 et correspondant à l'étape d'arbitrage des résultats comprend les étapes suivantes, à partir de tous les masques binaires issus des procédures de découpage effectuées sur une image à traiter et correspondant à chacune des images intermédiaires 11 à 14 :

- affectation des plans des masques binaires en fonction du taux de réussite associé,
- constitution des noyaux (surfaces de forte certitude) par sommation,
- création des noyaux par seuillage,
- étiquetage,
- écriture d'un fichier texte contenant les coordonnées cartésiennes des boîtes englobantes des objets localisés dans l'image,
- sauvegarde de l'image du masque binaire résultant.

Les images résultantes 111 à 114 issues de l'étape d'arbitrage 150 fournissent une représentation abstraite des noyaux des objets. On va maintenant décrire, en référence aux Figures 10 à 14, l'étape de reconstruction qui consiste, dans son essence, à utiliser les connaissances primaires abstraites des différents noyaux identifiés et l'image couleur initiale, pour reconstruire le ou les objets contenus dans l'image. On aboutit à la localisation finale des objets en propageant les informations minimales, de forte certitude (noyau), à l'image initiale. Après cette étape, les objets sont reconstitués dans leurs couleurs et leurs positions d'origine tout en étant isolés, et la reconstruction est achevée.

L'étape de reconstruction 160 se décompose elle-même en deux phases 161, 162. Une première phase 161 traite les images corrélées 111 à 113 puis la seconde phase 162 effectue une reconstruction à la fois à partir des résultats de la première phase et en fonction de l'image dé-corrélée 114. Un exemple de représentation de cette reconstruction est illustré sur les Figures 10 à 13.

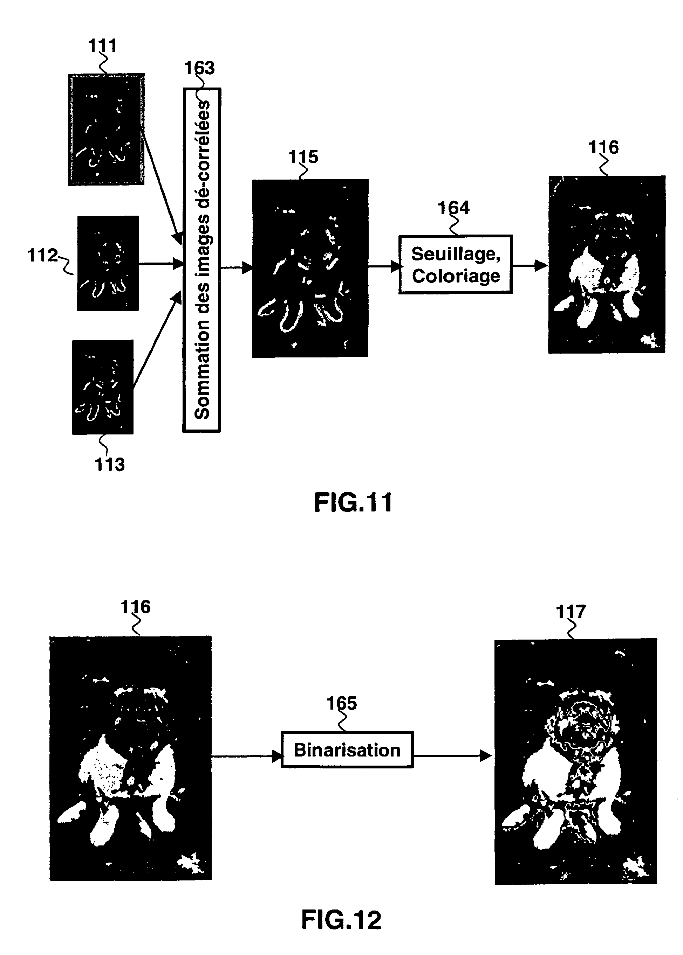

Les images résultats 111 à 113 des cartographies des plans corrélés sont, au sein de la première phase de traitement 161, soumises à une opération 163 de sommation pondérée pour fournir une image résultat 115 sur laquelle il est effectué, dans une étape 164, un coloriage pour fournir une image 116 (Figure 11) elle-même soumise à une opération de binarisation 165 pour fournir une image RGB reconstruite 117 qui constitue une image binaire.

L'opération de coloriage consiste à remplir une surface par sa couleur intrinsèque, qui est une couleur unique représentative, par exemple sa moyenne. A partir d'un pixel initial et pour chacun de ses plus proches voisins, on colorie ces derniers si leur valeur est inférieure à une métrique donnée, par exemple euclidienne, du pixel initial. L'opération est récursive et à son tour chacun des plus proches voisins devient ensuite un pixel initial.

On notera que l'étape 164 inclut la détermination de noyaux (surfaces de forte certitude) par seuillage et un coloriage avec la distance de seuil en partant de noyaux. Si au cours d'une opération d'étiquetage, l'image obtenue est considérée comme non valide, cette étape 164 peut être réitérée avec une distance de seuil réduite.

Avant la deuxième phase 162 de l'étape de reconstruction 160, on dispose d'une image RGB reconstruite 117 et d'une image 114 de la cartographie de l'image dé-corrélée 14.

Dans la deuxième phase 162, un traitement de reconstruction est effectué de la même manière que décrit précédemment en référence aux images 111 à 113. Ainsi, dans la deuxième phase 162, il est effectué une sommation des images 117 et 114, suivie d'une propagation des couleurs comme indiqué dans l'étape 164 de la Figure 11. L'image obtenue est binarisée, comme indiqué dans l'étape 165 de la Figure 12, pour fournir une image reconstruite binarisée 118 qui est alors soumise à un processus d'étiquetage final 170 pour fournir un masque binaire des objets identifiés avec leurs coordonnées cartésiennes.

La Figure 15 montre un exemple d'image initiale 10 comportant deux objets principaux significatifs, à savoir un chien et une feuille d'arbre, et les images finales d'objets individualisés identifiés automatiquement par le procédé selon l'invention, à savoir d'une part l'image 119 d'un chien et d'autre part l'image 120 d'une feuille d'arbre.

La Figure 16 représente un exemple 16 de processus manuel de découpe d'objets appliqué à l'image initiale 10 tandis que la Figure 17 représente l'image binaire résultant automatiquement du procédé selon l'invention à partir de la même image initiale 10.

La Figure 18 montre un exemple d'image 18 segmentée de façon classique en régions à partir de l'image initiale 10, mais ne permettant pas de repérer de façon autonome chaque objet de l'image.

## Revendications

1. Procédé de traitement d'images pour la réalisation automatique du partitionnement d'une image ou d'une pluralité d'éléments ou d'objets dont la forme a un sens à partir de la seule donnée de l'image à analyser, comprenant:

   a) produire des première, deuxième et troisième images (11, 12, 13) monoplan achromatiques corrélées comportant toute l'information de l'image à analyser mais présentant des caractéristiques chromatiques différentes, à partir de l'image à analyser,
   b) soumettre les première, deuxième et troisième images monoplan à une pluralité d'opérations de segmentation en composants homogènes basés sur des critères différents,
   c) analyser, pour chacune des première à troisième images monoplan, les résultats des différentes opérations de segmentation pour générer en relation avec chacune des première à troisième images monoplan des masques binaires (24, 34, 44, 54, 64, 74) constitués par des zones à forte certitude d'existence d'objets,
   **caractérisé en ce qu'**il comprend les étapes suivantes :
   d) comparer, pour chacune des première à troisième images monoplan, les masques binaires résultant des différentes opérations de segmentation et conserver comme significatives de la présence d'un objet les zones communes pour lesquelles le nombre de masques binaires superposables est supérieur à un seuil déterminé,
   e) procéder à la sommation pondérée des première à troisième images résultant de l'étape précédente d) pour obtenir une première image (115) résultat contenant les noyaux des composants homogènes,
   f) effectuer en partant des noyaux des composants homogènes un coloriage consistant à partir d'un pixel initial et pour chacun de ses plus proches voisins, à colorier ces derniers par une couleur unique si leur valeur est inférieure à une métrique donnée du pixel initial puis effectuer une binarisation de la première image résultat pour obtenir une deuxième image résultat contenant des composants homogènes, et
   g) extraire les objets individualisés de l'image.

2. Procédé selon la revendication 1, **caractérisé en ce qu'**il comprend l'étape supplémentaire h) de produire une quatrième image dé-corrélée selon le modèle HSV, Teinte - Saturation - Valeur, à partir de l'image à analyser, **en ce que** l'on applique également les étapes b), c) et d) à la quatrième image, et **en ce que**, après l'étape f), on effectue une étape i) de reconstruction d'une image identifiant des objets individualisés en combinant la deuxième image résultat à la quatrième image ayant subi les traitements des étapes b), c) et d) pour obtenir une troisième image résultat et en procédant à un nouveau coloriage de la troisième image résultat, avant d'extraire les objets individualisés de l'image reconstruite.

3. Procédé selon la revendication 1 ou la revendication 2, **caractérisé en ce que** l'on produit les première, deuxième et troisième images monoplan achromatiques corrélées à partir de l'image à analyser divisée selon trois bandes de fréquences de l'espace couleur RGB, Rouge, Vert, Bleu.

4. Procédé selon l'une quelconque des revendications 1 à 3, **caractérisé en ce que** lors de l'étape b) de segmentation en composants homogènes en utilisant une pluralité de critères différents, on procède

   i) à une détection des contours,
   ii) à une détection des caractéristiques de texture via un filtrage équivalent à un banc de filtres passe-haut et passe-bas.

5. Procédé selon la revendication 4, **caractérisé en ce que** lors de l'étape b) de segmentation en composants homogènes en utilisant une pluralité de critères différents, on procède en outre

    iii) à une détection chromatique et achromatique.

**6.** Procédé selon l'une quelconque des revendications 1 à 5, **caractérisé en ce que** l'étape f) de coloriage consiste, à partir d'un pixel initial, à colorier chacun de ses plus proches voisins d'une couleur semblable si leur valeur est inférieure à une métrique donnée du pixel initial et à réitérer le processus de façon récursive, chacun des pixels plus proches voisins devenant à son tour un pixel initial.

**7.** Procédé selon l'une quelconque des revendications 1 à 6, **caractérisé en ce que** l'on effectue les étapes b) et c) au moins deux fois en utilisant à chaque fois pour les opérations de segmentation des jeux de paramètres de contrôle d'entrée définis de façon nominale avec des valeurs différentes.

**8.** Procédé selon l'une quelconque des revendications 1 à 7, **caractérisé en ce que**, au niveau de chaque opération de segmentation, les paramètres de contrôle d'entrée sont modifiés automatiquement à la fin d'un processus de segmentation, si les résultats obtenus ne sont pas significatifs, et dans ce cas le processus de segmentation est réitéré de façon automatique par un rebouclage avec les nouvelles valeurs modifiées des paramètres de contrôle d'entrée.

**9.** Procédé selon la revendication 4, **caractérisé en ce qu'**une opération de segmentation en composants homogènes en procédant à une détection des contours avec un filtre optimal comprend les étapes suivantes :

    - conversion en un seul plan de luminance de l'espace RGB initial de l'image à traiter,
    - réalisation d'une moyenne afin d'éliminer le bruit lié à l'acquisition,
    - calcul de gradients horizontaux et de gradients verticaux,
    - sommation des deux images des gradients afin d'obtenir une seule image,
    - recherche du minimum et du maximum dans l'image obtenue afin de déterminer les valeurs haut et bas de seuillage,
    - seuillage par hystérésis par rapport aux valeurs haut et bas de seuillage précédemment déterminées,
    - élimination des bords,
    - binarisation,
    - ouverture morphologique suivie de multiples fermetures morphologiques elles-mêmes suivies de multiples ouvertures morphologiques,
    - remplissage de trous pour basculer le résultat obtenu des contours en un résultat disponible sous forme de régions.

**10.** Procédé selon la revendication 4, **caractérisé en ce qu'**une opération de segmentation en composants homogènes en procédant à une détection des caractéristiques de texture via un filtrage équivalent à un banc de filtres passe-haut et passe-bas comprend un processus de transformation en ondelettes qui est opéré d'une part sur des lignes puis sur des colonnes de l'image avec à chaque fois un filtre passe-bas, **caractérisé par** la formule

$$y(i) = 0{,}5 * x(i) + 0{,}5\, y(i\text{-}1)$$

et un filtre passe-haut **caractérisé par** la formule

$$y(i) = 0{,}5 * x(i) - 0{,}5\, y(i\text{-}1),$$

chaque élément (i, j) de la matrice 3D d'attributs résultant de la décomposition étant un vecteur caractérisant la distribution des valeurs des pixels au voisinage du point (i, j).

**11.** Procédé selon la revendication 10, **caractérisé en ce que**, après chaque opération de filtrage par un filtre passe-haut et un filtre passe-bas, on procède à une division par $2^n$ du nombre d'images obtenues de manière à diminuer le nombre de données à traiter, le nombre entier $\underline{n}$ étant d'autant plus grand que la résolution et la taille de l'image à traiter sont élevées.

**12.** Procédé selon la revendication 10 ou la revendication 11, **caractérisé en ce que** le processus de transformation en ondelettes est réitéré plusieurs fois sur n étages et **en ce que**, après une phase de lissage, on réduit en profondeur la taille de la matrice 3D d'attributs obtenue en ne retenant que le nombre d'images [2n + (n-1)] contenant le plus de détails.

**13.** Procédé selon l'une quelconque des revendications 10 à 12, **caractérisé en ce que** l'on effectue en outre un processus de recherche de la meilleure partition de la matrice d'attributs au sens de la maximisation de l'énergie.

**14.** Procédé selon la revendication 5, **caractérisé en ce qu'**une opération de segmentation en composants homogènes en procédant à une détection chromatique et achromatique comprend une étape de conversion de l'image vers le modèle HSV, Teinte-Saturation-Valeur, une étape de propagation achromatique pour éliminer l'arrière-plan, une étape d'ouverture effectuée lors d'une première itération pour éliminer le bruit et reconnecter les régions et, dans le cas d'une non-convergence en fin de cette première itération, une étape de fermeture effectuée lors d'une deuxième itération.

**Claims**

**1.** A method of processing images for automatically partitioning an image, or a plurality of elements, or of objects of shape that is meaningful solely on the basis of the data constituting the image to be analyzed, comprising:

a) producing, from the image to be analyzed, first, second, and third correlated achromatic single-plane images (11, 12, 13) containing all of the information in the image to be analyzed but presenting different color characteristics;

b) subjecting the first, second, and third single-plane images to a plurality of segmentation operations to find uniform components based on differing criteria;

c) for each of the first to third single-plane images, analyzing the results of the various segmentation operations in order to generate binary masks (24, 34, 44, 54, 64, 74) that are constituted by zones presenting high certainty of the existence of objects in association with each of the first to third single-plane images;

the method being **characterized in that** it comprises the following steps:

d) for each of the first to third single-plane images, comparing the binary masks that result from the various segmentation operations and conserving as indicative of the presence of an object those common zones for which the number of superimposed binary masks is more than a determined threshold;

e) performing weighted summing of the first to third images resulting from preceding step d) in order to obtain a first result image (115) containing the cores of the uniform components;

f) starting from the cores of the uniform components, performing coloring consisting in starting from an initial pixel and in coloring each of its nearest neighbors with a similar color value if their value is distant by less than a given metric from the initial pixel and then binarizing the first result image in order to obtain a second result image containing uniform components; and

g) extracting the individualized objects from the image.

**2.** A method according to claim 1, **characterized in that** it includes an additional step h) of producing a decorrelated fourth image using the HSV model Hue-Saturation-Value starting from the image to be analyzed, **in that** steps b), c), and d) are also applied to the fourth image, and **in that** after step f), a step i) is performed of reconstructing an image identifying individualized objects by combining the second result image with the fourth image having been processed according to step b), c) and d) so as to obtain a third result image, and in proceeding again with coloring the third result image, prior to extracting the individualized objects of the reconstructed image.

**3.** A method according to claim 1 or claim 2, **characterized in that** the correlated achromatic single-plane first, second, and third images are produced by splitting the image to be analyzed into three frequency bands in the RGB color space Red, Green, Blue.

**4.** A method according to anyone of claims 1 to 3, **characterized in that** during step b) of segmenting into uniform components by using a plurality of different criteria, the following steps are performed:

i) detecting outlines; and

ii) detecting texture characteristics via filtering that is equivalent to a bank of highpass and lowpass filters.

5. A method according to claim 4, **characterized in that** during step b) of segmenting into uniform components using a plurality of different criteria, the following step is also performed:

   iii) chromatic and achromatic detection.

6. A method according to anyone of claims 1 to 5, **characterized in that** coloring step f) consists in starting from an initial pixel and in coloring each of its nearest neighbors with a similar color value if their value is distant by less than a given metric from the initial pixel, and in reiterating the process recursively, each of the nearest neighbor pixels becoming in turn an initial pixel.

7. A method according to anyone of claims 1 to 6, **characterized in that** steps b) and c) are performed at least twice, on each occasion performing the segmentation operations by using sets of input control parameters that are nominally defined with different values.

8. A method according to anyone of claims 1 to 7, **characterized in that** within each segmentation operation, the input control parameters are modified automatically at the end of a segmentation process if the results obtained are not meaningful, in which case the segmentation process is reiterated automatically by looping back through the process using modified new values for the input control parameters.

9. A method according to claim 4, **characterized in that** an operation of segmenting into uniform components by detecting outlines with an optimum filter comprises the following steps:

   - converting the initial RGB space of the image to be processed into a single luminance plane;
   - averaging in order to eliminate noise associated with acquisition;
   - calculating horizontal and vertical gradients;
   - summing the two gradient images in order to obtain a single image;
   - seeking the minimum and the maximum in the resulting image in order to determine high and low thresholding values;
   - thresholding by hysteresis relative to the previously-determined high and low thresholding values;
   - eliminating edges;
   - binarizing;
   - morphological opening followed by multiple morphological closing in turn followed by multiple morphological opening; and
   - filling in the holes in order to convert the resulting outlines into a result that is available in the form of regions.

10. A method according to claim 4, **characterized in that** an operation of segmenting into uniform components by detecting texture characteristics using filtering equivalent to a bank of highpass and lowpass filters comprises a wavelet transformation process which is performed firstly on the rows and secondly on the columns of the image, each time using a lowpass filter, **characterized by** the formula:

$$y(i) = 0.5*x(i) + 0.5y(i-1)$$

and a highpass filter, **characterized by** the formula:

$$y(i) = 0.5*x(i) - 0.5y(i-1)$$

each element (i,j) of the 3D attribute matrix that results from the splitting being a vector characterizing the distribution of pixel values in the vicinity of the point (i,j).

11. A method according to claim 10, **characterized in that** after each operation of filtering by a highpass filter and a lowpass filter, the number of images obtained is divided by $2^n$ so as to reduce the number of images to be processed, the integer number n being greater for higher resolution and larger size of the image to be processed.

12. A method according to claim 10 or claim 11, **characterized in that** the wavelet transformation process is reiterated a plurality of times over n stages, and **in that** after a smoothing stage, the size of the resulting 3D attribute matrix is reduced in depth by retaining only the [2n+(n-1)] images that contain the most detail.

13. A method according to anyone of claims 10 to 12, **characterized in that** a process is further performed of seeking the partitioning of the attribute matrix that is best in terms of maximizing energy.

14. A method according to claim 5, **characterized in that** an operation of segmenting into uniform components by performing chromatic and achromatic detection comprises a step of converting the image into the HSV model Hue-Saturation-Value, a step of achromatic propagation in order to eliminate the background, an opening step performed during a first iteration to eliminate noise and in order to reconnect regions, and in the event of non-convergence at the end of this first iteration, a closing step performed during a second iteration.

**Patentansprüche**

1. Bildverarbeitungsverfahren für die automatische Realisierung der Partitionierung eines Bildes oder einer Vielzahl von Elementen oder Objekten, deren Form einen Sinn hat, allein auf Grundlage der Daten des zu analysierenden Bildes, umfassend:

a) erste, zweite und dritte monoplane, achromatische, korrelierte Bilder (11, 12, 13), die die gesamte Information des zu analysierenden Bildes umfassen, jedoch unterschiedliche chromatische Eigenschaften aufweisen, anhand des zu analysierenden Bildes erzeugen,
b) die ersten, zweiten und dritten monoplanen Bilder einer Vielzahl von Operationen zur Segmentierung in homogene Komponenten, basierend auf unterschiedlichen Kriterien, unterziehen,
c) für jedes der ersten bis dritten monoplanen Bilder die Ergebnisse der unterschiedlichen Segmentierungsoperationen analysieren, um in Verbindung mit jedem der ersten bis dritten monoplanen Bilder Binärmasken (24, 34, 44, 54, 64, 74) zu erzeugen, die von Bereichen mit hoher Gewißheit der Existenz von Objekten gebildet sind,
**dadurch gekennzeichnet, daß** es die folgenden Schritte umfaßt:
d) für jedes der ersten bis dritten monoplanen Bilder die aus den unterschiedlichen Segmentierungsoperationen hervorgehenden Binärmasken vergleichen und die gemeinsamen Bereiche, bei denen die Anzahl der übereinanderlegbaren Binärmasken oberhalb einer bestimmten Schwelle liegt, als signifikant für das Vorliegen eines Objektes bewahren,
e) die gewichtete Summation der aus dem vorhergehenden Schritt d) resultierenden ersten bis dritten Bilder durchführen, um ein erstes Ergebnisbild (115), das die Kerne der homogenen Komponenten enthält, zu erhalten,
f) ausgehend von den Kernen der homogenen Komponenten eine Kolorierung durchführen, die darin besteht, anhand eines Ausgangspixels und für jeden seiner nächsten Nachbarn letztere mit einer einzigen Farbe zu kolorieren, wenn deren Wert unterhalb einer gegebenen Metrik des Ausgangspixels liegt, anschließend eine Binarisierung des ersten Ergebnisbildes durchführen, um ein homogene Komponenten enthaltendes zweites Ergebnisbild zu erhalten, und
g) die Einzelobjekte aus dem Bild extrahieren.

2. Verfahren nach Anspruch 1, **dadurch gekennzeichnet, daß** es den zusätzlichen Schritt h) des Erzeugens eines vierten dekorrelierten Bildes nach dem HSV-Modell, Farbton - Sättigung - Hellwert, anhand des zu analysierenden Bildes umfaßt, daß auch die Schritte b), c) und d) auf das vierte Bild angewandt werden, und daß nach Schritt f) ein Schritt i) durchgeführt wird zur Rekonstruktion eines Einzelobjekte identifizierenden Bildes durch Kombinieren des zweiten Ergebnisbildes mit dem den Behandlungen der Schritte b), c) und d) unterzogenen vierten Bild, um ein drittes Ergebnisbild zu erhalten, und durch Durchführen eines erneuten Kolorierens des dritten Ergebnisbildes vor Extrahieren der Einzelobjekte aus dem rekonstruierten Bild.

3. Verfahren nach Anspruch 1 oder Anspruch 2, **dadurch gekennzeichnet, daß** die ersten, zweiten und dritten monoplanen, achromatischen, korrelierten Bilder anhand des zu analysierenden, entlang von drei Frequenzbändern des RGB-Farbraums, Rot Grün Blau, zerlegten Bildes erzeugt werden.

4. Verfahren nach einem der Ansprüche 1 bis 3, **dadurch gekennzeichnet, daß** während des Schrittes b) der Segmentierung in homogene Komponenten unter Verwendung einer Vielzahl unterschiedlicher Kriterien,

i) eine Detektion der Konturen,
ii) eine Detektion der Textureigenschaften über eine Filterung entsprechend einer Hochpaß- und Tiefpaß-Filterbank,

durchgeführt werden.

5. Verfahren nach Anspruch 4, **dadurch gekennzeichnet, daß** während des Schrittes b) der Segmentierung in homogene Komponenten unter Verwendung einer Vielzahl unterschiedlicher Kriterien, ferner

iii) eine chromatische und achromatische Detektion

durchgeführt wird.

6. Verfahren nach einem der Ansprüche 1 bis 5, **dadurch gekennzeichnet, daß** der Schritt f) der Kolorierung darin besteht, anhand eines Ausgangspixels einen jeden seiner nächsten Nachbarn mit einer ähnlichen Farbe zu kolorieren, wenn deren Wert unterhalb einer gegebenen Metrik des Ausgangspixels liegt, und den Prozeß rekursiv zu wiederholen, wobei ein jedes der Nächste-Nachbar-Pixel seinerseits zu einem Ausgangspixel wird.

7. Verfahren nach einem der Ansprüche 1 bis 6, **dadurch gekennzeichnet, daß** die Schritte b) und c) wenigstens zweimal durchgeführt werden, indem jedes Mal für die Segmentierungsoperationen Sätze von nominal definierten Eingangskontrollparametern mit unterschiedlichen Werten verwendet werden.

8. Verfahren nach einem der Ansprüche 1 bis 7, **dadurch gekennzeichnet, daß** im Bereich einer jeden Segmentierungsoperation die Eingangskontrollparameter am Ende eines Segmentierungsprozesses automatisch geändert werden, wenn die erhaltenen Ergebnisse nicht signifikant sind, und in diesem Fall wird der Segmentierungsprozeß durch ein Rückschleifen mit den neuen modifizierten Werten der Eingangskontrollparameter automatisch wiederholt.

9. Verfahren nach Anspruch 4, **dadurch gekennzeichnet, daß** eine Operation zur Segmentierung in homogene Komponenten unter Durchführung einer Detektion der Konturen mit einem optimalen Filter die folgenden Schritte umfaßt:

- Konvertierung in eine einzige Luminanz-Ebene des Ausgangs-RGB-Raums des zu verarbeitenden Bildes,
- Mittelwertbildung, um das mit der Erfassung verbundene Rauschen zu entfernen,
- Berechnung von Horizontalgradienten und Vertikalgradienten,
- Summation der beiden Bilder der Gradienten, um ein einziges Bild zu erhalten,
- Suche des Minimums und des Maximums in dem erhaltenen Bild, um den oberen und den unteren Schwellenwert zu bestimmen,
- Hysterese-Schwellwert-Verfahren im Vergleich zu den zuvor bestimmten oberen und unteren Schwellenwerten,
- Eliminieren der Kanten,
- Binarisierung,
- morphologisches Öffnen gefolgt von mehrfachem morphologischem Schließen, seinerseits gefolgt von mehrfachem morphologischem Öffnen,
- Füllen der Löcher, um das erhaltene Ergebnis der Konturen in ein in Form von Regionen verfügbares Ergebnis umzuwandeln.

10. Verfahren nach Anspruch 4, **dadurch gekennzeichnet, daß** eine Operation zur Segmentierung in homogene Komponenten unter Durchführung einer Detektion der Textureigenschaften über eine Filterung entsprechend einer Hochpaß- und Tiefpaß-Filterbank, einen Wavelet-Transformationsprozeß umfaßt, der einerseits an Zeilen, dann an Spalten des Bildes durchgeführt wird, jedes Mal mit einem Tiefpaßfilter, der **gekennzeichnet ist durch** die Formel

$$y(i) = 0{,}5 * x(i) + 0{,}5 \, y(i\text{-}1)$$

und einem Hochpaßfilter, der **gekennzeichnet ist durch** die Formel

$$y(i) = 0{,}5 * x(i) - 0{,}5 \, y(i\text{-}1),$$

wobei jedes Element (i, j) der aus der Zerlegung resultierenden 3D-Matrix von Attributen ein Vektor ist, der die Verteilung der Werte der Pixel in der Nähe des Punktes (i, j) kennzeichnet.

11. Verfahren nach Anspruch 10, **dadurch gekennzeichnet, daß** nach jeder Filterungsoperation mittels eines Hochpaßfilters und eines Tiefpaßfilters ein Dividieren der Anzahl der erhaltenen Bilder durch $2^n$ durchgeführt wird, um die Anzahl der zu verarbeitenden Daten zu reduzieren, wobei die Ganzzahl n um so größer ist, je höher bzw. größer die Auflösung und die Größe des zu verarbeitenden Bildes sind.

12. Verfahren nach Anspruch 10 oder Anspruch 11, **dadurch gekennzeichnet, daß** der Wavelet-Transformationsprozeß mehrere Male auf n Stufen wiederholt wird und daß nach einer Glättungsphase die Größe der erhaltenen 3D-Matrix von Attributen dadurch tiefenreduziert wird, daß lediglich die Anzahl von Bildern [2n + (n-1)] gewählt wird, die die meisten Details enthalten.

13. Verfahren nach einem der Ansprüche 10 bis 12, **dadurch gekennzeichnet, daß** ferner ein Prozeß zur Suche der besten Einteilung der Attribut-Matrix im Sinne der Energiemaximierung durchgeführt wird.

14. Verfahren nach Anspruch 5, **dadurch gekennzeichnet, daß** eine Operation zur Segmentierung in homogene Komponenten, unter Durchführen einer chromatischen und achromatischen Detektion, einen Schritt zur Konvertierung des Bildes in das HSV-Modell, Farbton - Sättigung - Hellwert, einen Schritt achromatischer Ausbreitung, um den Hintergrund zu entfernen, einen während einer ersten Iteration durchgeführten Öffnungsschritt, um das Rauschen zu entfernen und die Regionen wieder anzuschließen, sowie - im Fall einer fehlenden Konvergenz am Ende dieser ersten Iteration - einen Schließschritt, der während einer zweiten Iteration durchgeführt wird, umfaßt.

**FIG.1**

112    Pré-découpage    111

110

14    11    12    13

**FIG.2**

14

140    120    130

| Boite englobante | Boite englobante | Boite englobante |
|---|---|---|
| Image du masque binaire | Image du masque binaire | Image du masque binaire |

**FIG.3**

120 — IMAGE 14 → Transformée en Ondelettes (121) → Classificateur (122) → Validation? (123) → Masque binaire (125) / Boite englobante (126); 124 Modification des paramètres

**FIG.4**

130 — IMAGE 14 → Filtre Optimal (131) → Remplissage de trous (132) → Validation? (133) → Masque binaire (135) / Boite englobante (136); 134 Modification des paramètres

**140**

IMAGE ~14

Conversion vers HSV ~141

Zones homogènes ~142

Identification d'objets ~142

~145

Modification des paramètres — Validation? ~144

146 ~ Masque binaire    Boite englobante ~147

**FIG.5**

21 à 24

**120**    **140**

Paramètre 1    Paramètre 1

41 à 44

51 à 54

**120'**

Paramètre 2

71 à 74

**140'**

Paramètre 2

**130**    **130'**

Paramètre 1    Paramètre 2

31 à 34    61 à 64

**FIG.6**

EP 1 298 588 B1

34    64         74    44         24    54

94    104         84

**FIG.7**

114

34    64    74    44    24    54

Cartographie 150

**FIG.8**

114

21

**31 61 21 51**

**150**

Cartographie

**22 52**

**32 62**

Cartographie ~**150**

**111**

**FIG.9**

**112**

**33 63 23 53**

**150**

Cartographie

**113**

**111** **113** **112**

**116** **114**

**161** Phase 1

**160**

**118** Phase 2 ~**162**

**FIG.10**

**FIG.11**

**FIG.12**

**FIG.13**

**FIG.14**

119

10

120

**FIG.15**

16

118

**FIG.16**

**FIG.17**

18

**FIG.18**
**ART ANTERIEUR**